(19) Europäisches Patentamt
European Patent Office
Office européen des brevets

(11) **EP 4 484 497 A1**

(12) **EUROPEAN PATENT APPLICATION**

(43) Date of publication:
**01.01.2025 Bulletin 2025/01**

(21) Application number: **23306029.2**

(22) Date of filing: **27.06.2023**

(51) International Patent Classification (IPC):
***C08L 53/02*** (2006.01)     ***C09J 153/02*** (2006.01)

(52) Cooperative Patent Classification (CPC):
(C-Sets available)
**C08L 53/02; C09J 153/02**      (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Bostik SA
92700 Colombes (FR)**

(72) Inventors:
• **CESCHINI, Barbara
VENETTE (FR)**
• **SEBA, Bouchra
VENETTE (FR)**

(74) Representative: **Arkema Patent
Arkema France
DRD-DPI
420, rue d'Estienne d'Orves
92705 Colombes Cedex (FR)**

(54) **HOT MELT ADHESIVE**

(57) The present invention concerns a hot melt adhesive composition comprising:
- a) a styrene block polymeric component;
- b) at least one tackifying resin;
- c) a biobased plasticizer having a weight average molecular weight higher than or equal to 2 000 g/mol,

wherein the hot melt adhesive composition comprises a styrene content higher than or equal to 8.0%, and wherein the total weight content of the biobased plasticizer c) is lower than or equal to 12% by weight based on the weight of the hot melt adhesive composition.

EP 4 484 497 A1

(52) Cooperative Patent Classification (CPC): (Cont.)

C-Sets
**C08L 53/02, C08L 93/00, C08L 93/00;**
**C08L 53/02, C08L 93/00, C08L 93/04;**
**C09J 153/02, C08L 93/00, C08L 93/00;**
**C09J 153/02, C08L 93/00, C08L 93/04**

**Description**

TECHNICAL FIELD

The present invention relates to hot melt adhesive in particular useful for disposable articles, and more particularly as elastic attachment adhesive.

TECHNICAL BACKGROUND

Hot melt adhesives (HM adhesives) are substances which are solid at room temperature and which comprise neither water nor solvent. They are applied in the molten state after heating to a temperature generally of between 120 and 250°C, most often between 130 and 180°C, and solidify during cooling, thus forming a seal (or adhesive joint) which ensures the attachment of the two substrates to be assembled. Hot melt adhesives are generally provided in the form of compositions which comprise a thermoplastic polymer and optionally a tackifying resin and a plasticizer. Among these HM adhesives, hot melt pressure sensitive adhesives (HMPSA) are substances conferring an immediate tackiness property (also called *"tack"*) to a substrate coated with such adhesive which allows its instantaneous adhesion to another substrate under a slight and brief pressure, at room temperature.

Disposable hygiene articles are made from a wide variety of substrates (non-woven, elastomeric material, film, such as polyolefin film and in particular polyethylene or polypropylene film) bonded with adhesive materials. Among examples of disposable hygiene articles, mention may be made of diapers, napkins or adult incontinence disposable articles. The disposable hygiene articles are produced at high speed line rates. In such production, hot melt adhesives are typically used because they can be easily applied to substrates (at the molten state) and rapidly develop strong bond upon cooling, without any additional manufacturing steps such as solvent removal.

Several kinds of hot melt adhesives can be found in disposable hygiene articles, depending on their emplacement and final function, such as:

- Core adhesives: used to keep in place the diaper core (fluff and SuperAbsorbentPolymer "SAP"), during the manufacture of the diaper but also during the use of the diaper mainly after that said diaper has been wet.
- Construction adhesives: which bind the polyethylene back sheet to the nonwoven substrates or which bind two nonwoven substrates.
- Elastic adhesives: used to bind elastic material (such as for example polyurethane based strands) to sheet-like substrates (such as for example polyethylene "PE" or to polypropylene "PP" and Nonwoven substrates).

In particular, in elastic attachment applications, the adhesive should maintain the elastic material in place, particularly when solicited during manufacturing and use of the disposable hygiene article. Indeed, during the manufacture process, the elastic material (for example a set of elastic strands) is usually first stretched prior to bonding and then the adhesive is applied onto the elastic material, either by non-contact (spraying) or contact applications, then the elastic material coated with the adhesive are quickly laminated between two sheet-like substrates (for example a nonwoven substrate and a polyolefin film). After that, the elastic material is permitted to relax, creating a gathered (or rushed) laminate having substantial flexibility. The adhesive thus needs to present high cohesion and elasticity to be resistant enough to creep strength. Moreover, in order to avoid any adhesive failure, good adhesion on the elastic material is also recommended.

Besides, conventional hot melt adhesives are petrochemical-based, and rely on energy-intensive processes. In addition, a large percentage of the petroleum is transported from various parts of the world, which increases the carbon footprint. Generally, zero to very few raw materials in hot melt adhesives are made from renewable resources and thus contribution is not enough on the impact of the environment. There is an increased desire to reduce carbon footprint and to produce environmentally sound products. One method of making an environmentally sound adhesive is to decrease carbon footprint by forming a hot melt adhesive from materials having a high renewable resource content. Besides, adhesives made from renewable materials do not necessarily allow to reach similar or better properties than conventional petroleum-based adhesives.

There is thus a need for providing environment-friendly hot melt adhesives that allows to resolve at least a part of the above-mentioned drawbacks.

There is a need for providing an environment-friendly hot melt adhesive composition exhibiting good adhesion properties on a variety of substrate materials and fabrics, and a low creep retention.

There is a need for providing an environment-friendly hot melt adhesive composition exhibiting a good compromise between low creep retention, good adhesive properties, and good cohesive strength.

There is a need for providing an environment-friendly hot melt adhesive composition exhibiting a good compromise between low creep retention, good adhesive properties, good cohesive strength, and high storage modulus and Young modulus.

SUMMARY OF THE INVENTION

The present invention relates to a hot melt adhesive composition comprising:

- a) a styrene block polymeric component;
- b) at least one tackifying resin;
- c) a biobased plasticizer having a weight average molecular weight higher than or equal to 2 000 g/mol,

wherein the hot melt adhesive composition comprises a styrene content higher than or equal to 8.0%, and wherein the total weight content of the biobased plasticizer c) is lower than or equal to 12% by weight based on the weight of the hot melt adhesive composition.

In one embodiment, the styrene block polymeric component comprises a styrene block copolymer selected from the group consisting of SB, SI, SEB, SEP, SBBS, SBS, SEBS, SEPS, SEEPS, SIBS, SIS, random-block SBR, random-block SIR, and mixtures thereof.
Preferably, the styrene block polymeric component comprises a SIS or a SBS copolymer.
Preferably, the hot melt adhesive composition comprises from 5 % to 35 % by weight, preferably from 10% to 30% by weight, and even more preferably from 10% to 30% by weight of styrene block polymeric component, based on the total weight of the hot melt adhesive composition.
In one embodiment, the at least one tackifiying resin is selected from the group consisting of:

- i) natural and modified rosins and the hydrogenated derivatives thereof, such as, for example, gum rosins, wood rosins, tall-oil rosins, distilled rosins, dimerized rosins and polymerized rosins;
- ii) glycol, glycerol and pentaerythritol esters of natural and modified rosins, and the hydrogenated derivatives thereof,
- iii) polyterpene homopolymers and the hydrogenated derivatives thereof;
- iv) copolymers of terpene with a diene monomer, and the hydrogenated derivatives thereof;
- v) phenolic-modified terpene resins;
- and mixtures thereof.

Preferably, the hot melt adhesive composition comprises a mixture of at least one tackifying resin ii) and at least one tackifying resin iii).
In one embodiment, the hot melt adhesive composition comprises from 50% to 90 %, preferably from 55% to 80 %, and more preferably from 55% to 70% by weight of a tackifying resin (or of the mixture of tackifying resins in case a plurality of tackifying resins are present in the hot melt adhesive composition), based on the total weight of the hot melt adhesive composition.
Preferably, the styrene content of the hot melt adhesive composition ranges from 8.0% to 15.0%, more preferably from 9.0% to 12.0%.
Preferably, the biobased plasticizer has a weight average molecular weight ranging from 3 000 g/mol to 12 000 g/mol, more preferably ranging from 3 000 g/mol to 6 000 g/mol.
In one embodiment, the biobased plasticizer is selected from animal fat, plant oil (e.g. canola oil, corn oil, soybean oil, epoxidized soybean oil, palm oil, peanut oil, olive oil, sunflower oil, rapeseed oil, jatropha oil, coconut oil, castor oil, etc.), lactic acid derivatives, modified versions thereof, fatty acid derivatives, and combinations thereof.
Preferably, the biobased plasticizer has an acid number ranging from 1 to 20, preferably from 3 to 20 mg KOH/g.
Preferably, the biobased plasticizer has a viscosity at 25°C ranging from 1000 to 5 000 mPas, preferably from 1 500 to 2 500 mPas.
Preferably, the biobased plasticizer is a fatty acid derivative, preferably a fatty acid ester, more preferably a fatty acid polyester, and even more preferably a homopolymer of ricinoleic acid.
In one embodiment, the hot melt adhesive composition comprises from 1% to 10% by weight, preferably from 2% to 10% by weight of the biobased plasticizer c) based on the total weight of the hot melt adhesive composition.
In one embodiment, the hot melt adhesive comprises at least one fatty acid derivative d) having a weight average molecular weight lower than or equal to 1 500 g/mol, preferably lower than or equal to 1 000 g/mol, and even more preferably ranges from 250 g/mol to 1 000 g/mol.
Preferably, the hot melt adhesive composition has a Brookfield viscosity at 163°C of from about 2000 to about 10000 mPa.s, preferably from about 3000 to about 9000 mPas.
Preferably, the biocarbon content of the hot melt adhesive is greater than or equal to 60 %, preferably greater than or equal to 65 %, and even more preferably greater than or equal to 70 %.

Preferably, the hot melt adhesive composition exhibits:

- a creep retention lower than or equal to 20%, more preferably lower than or equal to 15%, and even more preferably lower than or equal to 10%; and/or
- a Young Modulus higher than or equal to 2 MPa, more preferably higher than or equal to 4 MPa; and/or
- a Storage Modulus (G') at 25°C higher than or equal to 100 kPa, more preferably higher than or equal to 500 kPa.

The present invention also relates to the use of the hot melt adhesive composition of the present invention, as positioning adhesive, core adhesive or elastic attachment adhesive, more preferably as elastic attachment adhesive.

The present invention also relates to a laminate comprising at least one elastic material and at least two substrates, said elastic material being inserted between two substrates and covered with the hot melt adhesive composition of the present invention.

The present invention also concerns an article comprising the laminate, said article being preferably a disposable absorbent article.

DETAILED DESCRIPTION

The invention will now be described in more details without limitation in the following description.

Unless otherwise mentioned, the percentages in the present application are percentages by weight.

In the present text, the amounts indicated for a given species can apply to this species according to all its definitions (as mentioned in the present text), including the narrower definitions.

**Hot melt adhesive composition**

In a first aspect, the present invention relates to a hot melt adhesive composition. The term *"hot melt"* is used herein to describe that the adhesive composition requires to be heated at least at 120°C, preferably at least at 140°C, to be applied on a substrate. The hot melt adhesive composition is thus solid at 23°C.

The present invention relates to a hot melt adhesive composition comprising:

- a) a styrene block polymeric component;
- b) at least one tackifying resin;
- c) a biobased plasticizer having a weight average molecular weight higher than or equal to 2 000 g/mol,

  wherein the hot melt adhesive composition comprises a styrene content higher than or equal to 8.0%, and
  wherein the total weight content of the biobased plasticizer c) is lower than or equal to 12% by weight based on the weight of the hot melt adhesive composition.

By *"biobased plasticizer"* is meant a plasticizer that derives at least partially from a biomaterial.

The biobased plasticizer has preferably a biocarbon content equal to or higher than 85 %, preferably equal to or higher than 90 %, and more preferably equal to or higher than 93 %.

The term *"bio-carbon"* indicates that the carbon is of renewable origin, or of natural origin and originates from a biomaterial, as indicated below. The biocarbon content and the biomaterial content are expressions denoting the same value.

A material of renewable origin, also called biomaterial, is an organic material in which the carbon derives from $CO_2$ recently fixed (on a human scale) by photosynthesis from the atmosphere. On earth, this $CO_2$ is captured or fixed by plants. At sea, $CO_2$ is captured or fixed by bacteria or plankton carrying out photosynthesis. A biomaterial (100% carbon of natural origin) has a $^{14}C/^{12}C$ isotope ratio greater than $10^{-12}$, typically of approximately $1.2 \times 10^{-12}$, while a fossil material has a zero ratio. Indeed, the isotope $^{14}C$ is formed in the atmosphere and is then integrated by photosynthesis, according to a time scale of a few decades at most. The half-life of $^{14}C$ is 5730 years. Thus, materials resulting from photosynthesis, namely plants in general, necessarily have a maximum $^{14}C$ isotope content.

The biomaterial content or biocarbon content is determined by using the standards ASTM D 6866 (ASTM D 6866-06) and ASTM D 7026 (ASTM D 7026-04). The ASTM D 6866 standard is *"Determining the Biobased Content of Natural Range Materials Using Radiocarbon and Isotope Ratio Mass Spectrometry Analysis",* while the ASTM D 7026 standard is *"Sampling and Reporting of Results for Determination of Biobased Content of Materials via Carbon Isotope Analysis".* The second standard makes reference in its first paragraph to the first standard.

The first standard describes a test for measuring the $^{14}C/^{12}C$ ratio of a sample and compares it with the $^{14}C/^{12}C$ ratio of a reference sample of 100 % renewable origin, to give a relative percentage of C of renewable origin in sample. The standard is based on the same concepts as $^{14}C$ dating, but without applying the dating equations.

The ratio thus calculated is referred to as the *"pMC"* (percent Modern Carbon). If the material to be analyzed is a mixture of biomaterial and fossil material (without radioactive isotope), then the pMC value obtained is directly correlated with the quantity of biomaterial present in the sample. The reference value used for the $^{14}$C dating is a value dating from the 1950s. This year was chosen because of the existence of nuclear tests in the atmosphere which introduced large quantities of isotopes into the atmosphere after this date. The 1950 reference corresponds to a pMC value of 100. Taking into account the thermonuclear tests, the current value to be retained is approximately 107.5 (which corresponds to a correction factor of 0.93). The radioactive carbon signature of a current plant is therefore 107.5. A signature of 54 pMC and 99 pMC therefore correspond to an amount of biocarbon in the sample of 50 % and 93 %, respectively.

In case the styrene block polymeric component comprises only one styrene block copolymer, the styrene content of the hot melt adhesive composition is defined as the styrene content of the styrene block polymeric component multiplied by its quantity by weight in the hot melt adhesive composition.

In case the styrene block polymeric component comprises a mixture of styrene block copolymers, the styrene content of the hot melt adhesive composition is defined as the sum of styrene content of each styrene block copolymer present in the styrene block polymeric component multiplied by its quantity by weight in the total hot melt adhesive composition.

For example, if polymer X' is present at 25 weight % (wX') with a styrene content of 15% (sX') and polymer Y' is present at 25 weight % (wY') with a styrene content of 20 weight % (sY'). The average styrene content of the formula is calculated in the following way: wX'*sX'+wY'* sY' = 0.25*15 + 0.25*20 = 8.75 weight %.

Preferably, the styrene content of the hot melt adhesive composition ranges from 8.0% to 15.0%, more preferably from 9.0% to 12.0%.

<u>Styrene block polymeric component a)</u>

The hot melt adhesive composition of the invention comprises a) a styrene block polymeric component. By *"styrene block polymeric component"* is meant a component consisting of at least one SBC (styrene block copolymer) *i.e.* a copolymer comprising at least one styrene block, including styrene triblock copolymers and styrene diblock copolymers.

The styrene block copolymer has at least one A block that includes styrene and at least one B block that includes, e.g., elastomeric conjugated dienes (e.g., hydrogenated and unhydrogenated conjugated dienes), sesquiterpenes (e.g., hydrogenated and nonhydrogenated sesquiterpenes), and combinations thereof. The A blocks and the B blocks bind to one another in any manner of binding such that the resulting copolymer exhibits a variety of structures including, e.g., random, straight-chained, branched, radial, star, comb, tapered, and combinations thereof. The block copolymer can exhibit any form including, e.g., linear A-B block, linear A-B-A block, linear A-(B-A)n-B multi-block, and radial (A-B)n-Y block where Y is a multivalent compound and n is an integer of at least 3, tetrablock copolymer, e.g., A-B-A-B, and pentablock copolymers having a structure of A-B-A-B-A.

Suitable styrene A blocks include, e.g., styrene, alpha-methylstyrene, o-methylstyrene, m-methylstyrene, p-methylstyrene, p-tert-butylstyrene, 2,4-dimethylstyrene, 2,4,6-trimethylstyrene, and combinations thereof.

Suitable block elastomeric conjugated diene B blocks include, e.g., butadiene (e.g., polybutadiene), isoprene (e.g., polyisoprene), 2,3-dimethyl-1,3-butadiene, 1,3-pentadiene, 1,3-hexadiene, and combinations thereof, and hydrogenated versions thereof including, e.g., ethylene, propylene, butylene and combinations thereof.

Suitable B block sesquiterpenes include, e.g., beta farnesene.

The styrene block polymeric component can comprise one or a mixture of styrene block copolymers.

When more than one styrene block copolymer is included the styrene content, the diblock content and the melt flow rate ranges specified for the styrene block polymeric component are a weight average of all the grades present. As an example, if the styrene block polymeric component comprises two styrene block copolymers X and Y. Polymer X is present at 25 weight % (wX) with a styrene content of 15% (sX) and polymer Y is present at 25 weight % (wY) with a styrene content of 20 weight % (sY). The average styrene content of the styrene block polymeric component is calculated in the following way: wX/(wX+wY)* sX + wY/( wX+wY)* sY = 0.5 (15) + 0.5 (20) = 17.5 weight %.

The styrene block polymeric component has preferably an average styrene content of from 20% by weight to 50% by weight, more preferably from 30% by weight to 50% by weight, and even more preferably from 30% to 47%.

The styrene block polymeric component preferably comprises from 0% by weight to 40%, more preferably from 0% by weight to 30% by weight, and even more preferably from 0% by weight to 15% by weight diblock.

By *"diblock content"* is meant the weight proportion of diblock copolymers in the styrene block polymeric component.

The styrene block polymeric component preferably comprises a styrene block copolymer selected from the group consisting of SB, SI, SEB, SEP, SBBS, SBS, SEBS, SEPS, SEEPS, SIBS, SIS, random-block SBR, random-block SIR and mixtures thereof.

Preferably, the styrene block copolymer is a SIS or SBS copolymer.

By *"SBBS"* is meant a styrene-butadiene-butylene-styrene triblock copolymer. By *"SBS"* is meant a styrene-butadiene-styrene triblock copolymer. By *"SEBS"* is meant a styrene-ethylene-butylene-styrene triblock copolymer. By *"SEPS"* is meant a styrene-ethylene-propylene-styrene triblock copolymer. By *"SEEPS"* is meant a styrene-ethylene-ethylene-propylene-styrene triblock copolymer. By *"SIBS"* is meant a styrene-isoprene-butadiene-styrene triblock copolymer. By *"SIS"* is meant a styrene-isoprene-styrene triblock copolymer. By *"random-block SBR"* is meant random-block styrene butadiene copolymers (part of the styrene being present as polystyrene blocks). By *"random-block SIR"* is meant random-block isoprene butadiene copolymers (part of the styrene being present as polystyrene blocks). By *"SB"* is meant a styrene-butadiene diblock copolymer. By *"SI"* is meant a styrene-isoprene diblock copolymer. By *"SEB"* is meant a styrene-ethylene-butylene diblock copolymer. By *"SEP"* is meant a styrene-ethylene-propylene diblock copolymer.

Useful commercial styrene block copolymers include KRATON D and G ® series from Kraton Polymers, EUROPRENE Sol T ® series from Versalis (Eni group), SOLPRENE ® series from Dynasol Elastomers, SINOPEC ® series from SINOPEC and Taipol ® and Vector® series from TSRC Corporation. Other useful examples include:

- Sinopec® YH-1126, a linear SIS triblock copolymer with a styrene content of 16 %, and a diblock content of 50 %;
- Sinopec® YH-1209, a linear SIS triblock copolymer with a styrene content of 30 %, and a diblock content of less than 1 %;
- Kraton® D1152, a mixture of linear SBS triblock and SB diblock copolymers, with a styrene content of 29.5 % by weight relative to the total weight of the mixture, an average molecular weight of around 122 000 g/mol, a melt flow index or MFI (measured according to ISO1133) of 8.5 grams/ 10 minutes at 200°C under a load of 5 kilograms, and a SB diblock content of around 17 % by weight relative to the total weight of the mixture.
- Kraton® D1161, a mixture of linear SIS triblock and SI diblock copolymers, with a styrene content of 15 % by weight relative to the total weight of the mixture, an MFI (measured according to ISO1133) of 9 g/10 min at 200°C under a load of 5 kg, an average molecular weight of around 220 000 g/mol, and a SI diblock content of around 19 % by weight relative to the total weight of the mixture.
- Taipol® SBS 4202 from TSRC Corporation, a linear SBS triblock copolymer with a styrene content of 40 % by weight relative to the total weight of the triblock copolymer, an MFI (measured according to ASTM D1238) of 3 to 10 g/10 min at 190°C under a load of 5 kg, an average molecular weight of around 102 400 g/mol.
- Vector® 4411 from TSRC Corporation, a linear SIS triblock copolymer with a styrene content of 44 % by weight relative to the total weight of the triblock copolymer, an MFI (measured according to ASTM D1238) of 40 g/10 min at 200°C under a load of 5 kg, an average molecular weight of around 106 000 g/mol.
- Europrene® SOL TE9326 (linear SIS triblock copolymer, styrene block content of about 30 %, diblock content of about 15 % from Versalis.

Preferably, the hot melt adhesive composition is substantially free of radial styrene block copolymers.

The hot melt adhesive composition preferably comprises from 5 % to 35 % by weight of styrene block polymeric component, based on the total weight of the hot melt adhesive composition. More preferably, the hot melt adhesive composition comprises from 10% to 30 % by weight, even more preferably from 15 % to 30 % by weight, of styrene block polymeric component, based on the total weight of the hot melt adhesive composition.

Tackifying resin b)

The hot melt adhesive composition comprises b) at least one tackifying resin (tackifier).

Suitable tackifying resins for the invention are those which are compatible with the styrene block polymeric component.

The tackifiying resin may be selected from the group consisting of:

- Aliphatic petroleum hydrocarbon resins, resulting from the polymerization of monomers consisting primarily of olefins and di-olefins, and the hydrogenated derivatives thereof;
- Cyclic petroleum hydrocarbon resins and the hydrogenated derivatives thereof;
- Aromatic petroleum hydrocarbon resins and the hydrogenated derivatives thereof;
- Aromatic-modified cycloaliphatic resins and the hydrogenated derivatives thereof;
- Aromatic-modified aliphatic resins and the hydrogenated derivatives thereof;
- Terpene-based resins and the hydrogenated derivatives thereof;
- Rosin-based resins and the hydrogenated derivatives thereof;
- Mixtures thereof.

Examples of suitable tackifying resins include those commercially available under the tradenames Eastotac® H100W (resin C5 fully hydrogenated) from Eastman Chemical Company; Escorez® 2203LC (resin C5/C9) from ExxonMobil Chemical company; Sukorez® SU 120 (resin DCPD fully hydrogenated), Sukorez® SU 210 (resin DCPD/C5 fully hydrogenated), Sukorez® SU 420 (resin DCPD/C9 partially hydrogenated), Sukorez® SU525 (resin DCPD fully hydrogenated) and Hikorez® H2100 (resin C5 hydrogenated) from Kolon; Regalite® S7125 (resin C9 partially hydrogenated) from Eastman Chemical Company; HS-130 (resin DCPD hydrogenated) from Hanwha Solutions/chemical Corporation; Luhorez HD1120 (resin DCPD hydrogenated) from Tianjin Luhua Chemical; Henghe HM1000 (resin DCPD/C9 hydrogenated) and Henghe H5-1001 (resin C5 fully hydrogenated) from Henghe Materials and Science Technology Co. LTD; unmodified natural tall oil rosins from Kraton sold under the trade names Sylvaros® (85, 90 and NCY); partially hydrogenated rosin from Eastman sold under the trade name Foralyn® E; the fully hydrogenated rosin from Eastman sold under the trade name Foral® AX-E; the fully hydrogenated rosin from DRT sold under the trade name Foral®DX; the fully hydrogenated rosin ester from DRT sold under the trade name Foral® 105; the dimerized rosin from Eastman sold under the trade name Dymerex®; Sylvalite® RE 100L ou RE 100S (pentaerythritol based tall-oil rosin ester), Sylvalite® RE 85L (a glycerol ester of tall oil rosin) from Kraton; Sylvalite 9000 from Kraton (fully hydrogenated tall oil rosin ester); polyterpene tackifiers from Kraton sold under the trade names Sylvagum® TR and Sylvares® TR series (7115, 7125, A25L, B115, M1115); the polyterpene PX1250H from Yasuhara; the polyterpene from DRT sold under the trade name DERCOLYTEOM105 (resulting from the polymerization of α-pinene and β-pinene and having a Ring and Ball softening point of 105°C); the terpene phenol resins from Kraton sold under the trade names Sylvares® TP (96, 2040, 300, 7042, 2019).

The terpene-based resins include polyterpene homopolymers, copolymers of terpene with a diene monomer (for example styrene, α-methylstyrene, etc), phenolic-modified terpene resins.

The term "copolymers" typically include terpolymers.

The hydrogenated derivatives typically include both partially and fully hydrogenated derivatives.

The rosin-based resins include rosins and rosin esters.

The tackifying resin may have a Ring and Ball softening point (as measured according to ASTM E28) from about 50°C to about 140°C, such as, for example, from about 50 to about 90°C, or from about 90 to about 120°C, or from about 120 to about 140°C.

Preferably, at least one tackifiying resin is chosen from the group consisting of:

- i) natural and modified rosins and the hydrogenated derivatives thereof, such as, for example, gum rosins, wood rosins, tall-oil rosins, distilled rosins, dimerized rosins and polymerized rosins;
- ii) glycol, glycerol and pentaerythritol esters of natural and modified rosins, and the hydrogenated derivatives thereof, such as, for example, the glycerol esters of pale wood rosin, the glycerol esters of hydrogenated rosin, the glycerol esters of polymerized rosin, the pentaerythritol esters of pale wood rosin, the pentaerythritol esters of hydrogenated rosin, the pentaerythritol esters of tall oil rosin, the tall oil rosin esters obtained from a mixture of glycerol and pentaerythritol, the pale wood rosin esters obtained from a mixture of glycerol and pentaerythritol, the hydrogenated rosin esters obtained from a mixture of glycerol and pentaerythritol, the esters of polymerized rosin obtained from a mixture of glycerol and pentaerythritol, and the phenolic modified pentaerythritol esters of rosin;
- iii) polyterpene homopolymers and the hydrogenated derivatives thereof;
- iv) copolymers of terpene with a diene monomer, and the hydrogenated derivatives thereof;
- v) phenolic-modified terpene resins such as, for example those resulting from the condensation, in an acidic medium, of a terpene and a phenol;
- and mixtures thereof.

More particularly, the hot melt adhesive composition comprises a mixture of at least one tackifying resin ii) and at least one tackifying resin iii) as defined above.

The tackifying resin may have a biocarbon content equal to or higher than 70 %, preferably equal to or higher than 80 %, and more preferably equal to or higher than 90 %.

The hot melt adhesive composition preferably comprises from 50% to 90 %, more preferably from 55% to 80 %, and even more preferably from 55% to 70% by weight of a tackifying resin (or of the mixture of tackifying resins in case a plurality of tackifying resins are present in the hot melt adhesive composition), based on the total weight of the hot melt adhesive composition.

Preferably, the hot melt adhesive composition comprises from 20% to 45% by weight of at least one tackifier resin ii) and from 20% to 45% by weight of at least one tackifier resin iii).

Biobased plasticizer

The hot melt adhesive composition comprises a biobased plasticizer c), so its weight content is not zero.

The hot melt adhesive composition comprises 12% by weight or less of a biobased plasticizer having a weight average molecular weight higher than or equal to 2 000 g/mol.

The hot melt adhesive composition preferably comprises from 1% to 10% by weight, more preferably from 2% to 10% by weight based on the total weight of the hot melt adhesive composition.

Preferably, if the hot melt adhesive composition comprises a mixture of several biobased plasticizers, the total content of the sum of the biobased plasticizers is 12% by weight or less, based on the total weight of the hot melt adhesive composition.

The biobased plasticizer has a weight average molecular weight higher than or equal to 2 000 g/mol, preferably higher than or equal to 2 500 g/mol, and even more preferably ranges from 3 000 g/mol to 12 000 g/mol. Even more preferably, the biobased plasticizer has a weight average molecular weight ranging from 3 000 g/mol to 6 000 g/mol.

The biobased plasticizer includes animal fat, plant oil (e.g. canola oil, corn oil, soybean oil, epoxidized soybean oil, palm oil, peanut oil, olive oil, sunflower oil, rapeseed oil, jatropha oil, coconut oil, castor oil, etc.), lactic acid derivatives, modified versions thereof, fatty acid derivatives, and combinations thereof.

The weight average molecular weight of the bioplasticizer is determined by gel permeation chromatography, using standards such as polystyrene. More particularly, it is determined with a Waters alliance instrument, using THF as eluent, with a flow rate of 1ml/min at 35°C, calibrated with polystyrene.

Herein, the fatty acid refers to an aliphatic carboxylic acid having at least one carboxy group, and may have one or several hydroxy groups. Fatty acids are broadly divided into saturated fatty acids and unsaturated fatty acids. The saturated fatty acid is an acid having no double bond and no triple bond in a carbon chain. The unsaturated fatty acid is an acid having one or several double bond or triple bond in a carbon chain.

The fatty acid may be selected from the group consisting of: butyric acid, caproic acid, caprylic acid, capric acid, lauric acid, myristic acid, palmitic acid, stearic acid, oleic acid, linoleic acid, erucic acid, ricinoleic acid, dihydrostearic acid, linoleic acid, eicostanic acid, 2-Hydroxybutanoic acid, 3-Hydroxybutanoic acid, 4-Hydroxybutyric acid, 2-Hydroxytetradecanoic acid, 3-Hydroxytetradecanoic acid, 2-Hydroxyhexadecanoic acid, 3-Hydroxyhexadecanoic acid, 3-Hydroxyoctadecanoic acid, 12-Hydroxyoctadecanoic acid, 17-Hydroxyoctadecanoic acid, and mixtures thereof.

The fatty acid may be derived from an animal fat, or a vegetable oil such as for example castor oil, sunflower oil, coconut oil, corn oil, canola oil, olive oil, palm oil, cottonseed oil, rapeseed oil, safflower oil, soybean oil, sesame oil, almond oil, avocado oil, hemp oil, and linseed oil. A vegetable oil is a composition comprising triple esters of fatty acids and of glycerol (also called *"triglycerides"*).

The expression *"fatty acids derived from vegetable oil"* is thus intended to designate the fatty acids present in the molecular structure of these triglycerides. Said fatty acids can be obtained, in the form of isolated compounds, by saponification, hydrolysis or methanolysis of said triglycerides.

As used herein, the derivatives of the fatty acids (fatty acid derivatives) are fatty acid based components, which comprises at least one fatty acid radical within their backbone. Examples of fatty acid derivatives typically include compounds obtained by one or several chemical reactions involving fatty acids, or natural compound based on fatty acid.

Fatty acid derivatives include both unsaturated and saturated fatty acid derivatives.

The fatty acid derivative is preferably selected from the group consisting of: fatty acid amides, fatty acid esters, dimers or trimers of fatty acid, fatty alcohols, fatty aldehydes, fatty ketones, their hydrogenated derivatives, and mixtures thereof.

Preferably, the fatty acid derivative is not a vegetable oil, and not an animal fat.

More preferably, the fatty acid derivative F1 is selected from fatty acid esters, their hydrogenated derivatives, and mixtures thereof.

The hydrogenated derivatives may include both partially or completely hydrogenated derivatives.

The fatty acid amide may be any suitable amide compound derived from the reaction between a fatty acid and ammonia or an amine-containing compound (e.g., a compound containing a primary amine group or a secondary amine group).

Fatty acid esters can comprise one or several ester functions.

Fatty acid esters typically include:

- fatty acid esters resulting from chemical reaction between polyol and/or monol with one or several fatty acids or triglycerides, the chemical reaction being selected from esterification, transesterification. The triglycerides preferably come from vegetable oil or animal fat.

The mono-alcohol may be selected from methanol, ethanol, propanol, isopropanol, butanol, 2-ethylhexanol, phenol, fatty alcohol, and mixtures thereof. The polyol may be selected from glycerol, pentaerythritol, erythritol, sorbitol, ethylene glycol, propylene glycol, butylene glycol, 1,3-propanediol, 1,4-butanediol, 1,6-hexanediol, 1,4-cyclohexanediol, trimethylolpropane, pentaerythritol, diethylene glycol, triethylene glycol, tetraethylene glycol, pentaethylene glycol, hexaethylene glycol, and mixtures thereof. The fatty alcohol are typically derived from fats and oils, originating in plants, but also synthesized in animals and algae. The fatty alcohol may include oleyl alcohol, lauryl alcohol, stearyl alcohol, myristyl alcohol, palmitoleyl alcohol, nonadecyl alcohol, arachidyl alcohol, erucyl alcohol, etc.

Preferred examples are fatty acid alkyl esters. Fatty acid alkyl esters more preferably include fatty acid methyl esters, fatty acid ethyl esters, fatty acid isopropyl esters, fatty acid isobutyl esters, fatty acid isoamyl esters, fatty acid 2-ethylhexyl esters.

- fatty acid esters resulting from functionalization (derivatization) of another fatty acid ester (such as for example epoxidation of a first fatty acid ester to provide a second fatty acid ester with epoxy moiety; alkoxylation ; acylation ; etc..).
- monoglyceride, diglyceride, triglycerides, and mixtures thereof;
- fatty acid polyesters; and
- mixtures thereof.

Fatty acid polyesters are polymers/oligomers that contain ester function in at least one repeat unit of their main chain.

Fatty acid polyesters typically include fatty acid oligoesters and fatty acid copolyesters.

Fatty acid polyesters preferably include homopolymers of fatty acids, and copolymers of fatty acids (copolymerization of different fatty acid), and copolymers of fatty acids with monol and/or polyol, and mixtures thereof.

The homopolymers of fatty acids may result from the polycondensation of a fatty acid comprising hydroxyl group, or a mixture of fatty acids comprising at least one fatty acid with hydroxyl group.

Preferably, the homopolymers are homopolymers of ricinoleic acid.

Preferably, the biobased plasticizer has a glass transition temperature lower than or equal to 0°C, more preferably lower than or equal to -20°C, and even more preferably ranging from -80°C to -20°C. The glass transition temperature may be measured by DSC analysis, according to ISO 11357-1:1999. More preferably, it is measured with the following conditions and parameters:

On a Mettler DSC 1 analyzer, a sample of 10 mg of sample is cooled under nitrogen flow from 23°C to -80°C for 10 minutes.

Then, the temperature is increased from -80°C to 200°C at a heating rate of 15°C/min (called first heating step)

After reaching 200°C and stabilized 5min, the temperature is decreased to -80°C, at a cooling rate of 15°C/min (called cooling step).

After reaching -80°C and stabilized 10 min, the temperature is increased to 200°C, at a heating rate of 15°C/min (called second heating step)

The glass transition temperature is measured on the second heating step, and corresponds to the inflexion point Ti,g. This value can be measured at the peak maximum of the signal derivative.

Preferably, the biobased plasticizer has an acid number ranging from 1 to 20, more preferably from 3 to 20 mg KOH/g. The acid number may be measured according to DIN EN ISO 2114:2000 (AC:2005).

The biobased plasticizer has preferably a biocarbon content higher than or equal to 60%, preferably higher than or equal to 80%, and even more preferably higher than or equal to 95%.

The biobased plasticizer has preferably a viscosity at 25°C ranging from 1000 to 5 000 mPas, more preferably from 1 500 to 2 500 mPas.

Preferably, the biobased plasticizer is a fatty acid ester, and more particularly a fatty acid polyester. Even more preferably, it is a homopolymer of ricinoleic acid.

Suitable fatty acid oligoesters and polyesters are commercially available from Vandeputte such as oligoesters of ricinoleic acid (acid number = 7 or 14 mg KOH/g), from Vandeputte such as VEOPUR 759035 (oligoester of castor oil - side OH groups of castor oil being transesterified with ester functions of the castor oil itself thus eliminating glycerol, acid number = 3 mg KOH/g).

Fatty acid derivative d)

The hot melt adhesive composition may comprise at least one fatty acid derivative d) having a weight average molecular weight lower than or equal to 1 500 g/mol, preferably lower than or equal to 1 000 g/mol, and even more preferably ranges from 250 g/mol to 1 000 g/mol. Even more preferably, the fatty acid derivative d) has a weight average molecular weight ranging from 300 g/mol to 800 g/mol.

The weight average molecular weights are determined by gel permeation chromatography, using standards such as polystyrene. More particularly, it is determined with a Waters alliance instrument, using THF as eluent, with a flow rate of 1ml/min at 35°C, calibrated with polystyrene.

The description of the fatty acid derivative d) is similar to the one for the fatty acid derivative of the biobased plasticizer c) above (except the average molecular weight).

The fatty acid derivative d) has preferably a biocarbon content higher than or equal to 60%, preferably higher than or equal to 80%, and even more preferably higher than or equal to 95%.

The fatty acid derivative d) has preferably a viscosity lower than or equal to 5000 mPas at 25°C, more preferably lower than or equal to 3000 mPas at 25°C.

An example of a fatty acid derivative (fatty acid ester in particular) may be the commercially available RADIA 7916 (methyl stearate, acid number 0.4 mg KOH/g) or RADIA 7195 (isopropyl stearate, acid number 0.1 mg KOH/g), or RADIA 7231 (isopropyl oleate) commercialized by OLEON, or Esterol A (methyl esters of linear fatty acids) commercialized by Arkema.

Preferably, the fatty acid derivative d) is preferably a fatty acid ester, and more preferably fatty acid ester resulting from chemical reaction between polyol and/or monol with one or several fatty acids (or triglycerides), the chemical reaction being selected from esterification, transesterification.

Even more preferably, the fatty acid derivative d) is selected from fatty acid alkyl esters, and mixtures thereof.

Preferably, in the hot melt adhesive composition, the total weight content of the sum of the weight content of biobased plasticizer c) and the weight content of fatty acid derivative d) is 12% by weight or less based on the total weight of the hot melt adhesive composition.

Stabilizer

The hot melt adhesive composition also preferably comprises at least one stabilizer, more preferably at least one antioxidant.

The hot melt adhesive composition comprises from about 0 to about 5 %, preferably from 0 to about 3 %, more preferably from about 0.1 to about 3 %, more preferably from about 0.1 to 2 %, by weight of a stabilizer, based on the total weight of the hot melt adhesive composition.

Suitable stabilizers are incorporated to help protect the polymers noted above, and thereby the total adhesive system, from the effects of thermal and oxidative degradation which normally occurs during the manufacture and application of the adhesive composition, as well as in the ordinary exposure of the final product to the ambient environment. Such degradation is usually manifested by deterioration in the appearance, physical properties and performance characteristics of the hot melt adhesive composition.

Among the applicable stabilizers, more particularly antioxidants, mention can be made of high molecular weight hindered phenols and multifunction phenols, such as sulfur and phosphorous-containing phenols. Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency and correspondingly, its reactivity; this steric hindrance thus providing the phenolic compound with its stabilizing properties. Representative hindered phenols include: 1,3,5-trimethyl-2,4,6-tris(3-5-di-tert-butyl-4-hydroxybenzyl) benzene; pentaerythritol tetrakis-3(3,5-di-tert-butyl-4-hydroxyphenyl) propionate; n-octadecyl-3(3,5-di-tert-butyl-4-hydroxyphenyl) propionate, 4.4'-methylenebis(4-methyl-6-tert-butylphenol); 2,6-di-tert-butylphenol; 6-(4-hydroxyphenoxy)-2,4-bis(n-octylthio)-1,3,5-triazine; 2,3,6-tris(4-hydroxy-3,5-di-tert-butyl-phenoxy)-1,3,5-triazine; di-n-octadecyl-3,5-di-tert-butyl-4-hydroxybenzylphosphonate; 2-(n-octyl-thio)ethyl-3,5-di-tert-butyl-4-hydroxybenzoate and sorbitol hexa-3(3,5-di-tert-butyl-4-hydroxy-phenyl)propionate.

The performance of these antioxidants may be further enhanced by utilizing, in conjunction therewith: (1) synergists such as, for example, thiodipropionate esters and phosphites; examples of these include dialuryl thiodipropionate (DLTDP); and (2) chelating agents and metal deactivators as, for example, ethylenediaminetetraacitic acid, salts thereof and disalicylalpropylenediimine.

Suitable antioxidants include those commercially available under the tradenames Irganox® 1010 (tetrakis(methylene(3,5-di-ter-butyl-4-hydroxyhydrocinnamate)) methane), Irgafos® 168 (tris(2,4-ditert-butylphenyl)phosphate) and Irganox® PS800 (propanoic acid, 3,3'-thiobis-1,1'-didodecyl ester) from BASF, Chinox® 1010 (pentaerythritol tetrakis(3-(3,5-di-tert-butyl-4-hydroxyphenyl) propionate)) from Shuangjian, Evernox® 1010 and Everfos® 168 from Everspring Chemical, Songnox® 10 and 1680 from Songwon.

Other additives

The hot melt adhesive composition may further comprise at least one other additive, preferably in an amount of from 0 to 5 %, for example from 0.1 to 5 %, by weight, by total weight of the adhesive composition.

The additives may be selected from the group consisting of inert colorants (*e.g.* titanium dioxide), fillers (*e.g.* talc, calcium carbonate, clay, silica, mica, wollastonite, feldspar, aluminum silicate, alumina, hydrated alumina, glass microspheres, ceramic microspheres, thermoplastic microspheres and mixtures thereof), surfactants, additional polymers other than styrene block copolymers, crosslinking agents, nucleating agents, reactive compounds, fire-retardant mineral or organic agents, ultraviolet (UV) or/and infrared (IR) light absorbing agents, UV or/and IR fluorescing agents, wax, and mixtures thereof. These optional other additives are well known in this art.

The additional polymers may be chosen from the group consisting of polyolefins, amorphous poly-alpha-olefins, ethylene-vinyl acetate polymers (EVA), polyamides, and mixtures thereof. The hot melt adhesive may comprise from about 0 to about 5 % by weight of at least one additional polymer, by total weight of the composition. However, preferably, the holt melt composition does not comprise an additional polymer.

The wax may be selected from the group consisting of microcrystalline waxes, paraffin waxes, polyethylene waxes, polypropylene waxes, by-product polyethylene waxes, and Fischer-Tropsch waxes.

Preferably, the holt melt composition comprises a wax.

Preferably, the hot melt adhesive composition does not comprise mineral oil, such as naphtenic oil or paraffinic oil.

Preferably, the hot melt adhesive composition does not comprise polyolefins, more preferably does not comprise additional polymers other than the styrene block copolymers.

Hot melt adhesive composition

The hot melt adhesive composition may have a Brookfield viscosity at 163°C of from about 2000 to about 10000 mPa.s, preferably from about 3000 to about 9000 mPas. The Brookfield viscosity may be measured according to the standard method ASTM D-3236, using a Brookfield viscometer of the type Spindle 27, at a temperature of about 163°C.

The biocarbon content of the hot melt adhesive is preferably greater than or equal to 60 %, more preferably greater than or equal to 65 %, and even more preferably greater than or equal to 70 %.

The hot melt adhesive composition exhibits advantageously at least one of the following features:

- a creep retention lower than or equal to 20%, more preferably lower than or equal to 15%, and even more preferably lower than or equal to 10%;
- a Young Modulus higher than or equal to 2 MPa, more preferably higher than or equal to 4 MPa;
- a Storage Modulus at 25°C (G') higher than or equal to 100 kPa, more preferably higher than or equal to 500 kPa;
- good adhesive properties;
- good cohesive strength.

The creep retention, the Young Modulus and the storage Modulus are measured as described in the experimental part.

## Process for preparing the hot melt adhesive composition

The invention also relates to a process for preparing the hot melt adhesive composition as described above.

The hot melt adhesive composition may be prepared by mixing the styrene block polymeric component, the at least one tackifying resin, the biobased plasticizer, in the molten state. Optional other ingredients or additives of the composition, as described above, in particular the at least one stabilizer, may be mixed with the abovementioned components.

The hot melt adhesive composition of the present invention may be produced using any of the techniques known in the art. Preferably, the step of mixing is carried out at a temperature of from 120 to 160°C. The ingredients are preferably mixed for at least several hours, typically at least 3 hours, and preferably from 3 to 6 hours.

The hot melt adhesive composition according to the invention can be prepared in presence of dioxygen (such as under air atmosphere), or preferably under inert atmosphere *e.g.* under carbon dioxide or nitrogen to limit potential degradation by oxidative reactions.

The process for preparing the hot melt adhesive composition according to the invention preferably comprises:

- a first step of melting and mixing the styrene block polymeric component and the biobased plasticizer,
- a second step of adding the tackifying resin into the mixture obtained in the previous step, under stirring,

Other useful optional ingredients or additives which may be present in the hot melt adhesive composition according to the invention, as described above, may be added at any step of the process according to the invention.

## Uses

The present invention also relates to the use of a hot melt adhesive composition as described above, in a variety of other applications and constructions, for example forming permanent bonds, temporary bonds (e.g. removable and repositionable adhesive applications), medical dressings (e.g. wound care products), bandages, surgical pads, drapes, gowns, labels, tapes, filters, and combinations thereof.

The present invention also relates to the use of the hot melt adhesive composition as defined above, as positioning adhesive, core adhesive or elastic attachment adhesive, more preferably as elastic attachment adhesive.

The present invention relates to the use of the hot melt adhesive composition as defined above for bonding substrates.

The present invention more particularly relates to the use of the hot melt adhesive composition as defined in the present invention for bonding an elastic material between two separate substrates.

Another object of the present invention is a laminate comprising at least one elastic material and at least two substrates, said elastic material being inserted between two substrates and covered with the hot melt adhesive composition of the invention.

By "laminate" it is to be understood a multi-layer material, i.e. a material consisting in at least two layers.

A material is typically considered elastic when it is characterized as having a high percent elastic recovery (i.e., a low percent permanent set) after application of a biasing force. Ideally, elastic materials are characterized by a combination of three temperature independent properties, i.e., a low percent permanent set, and a low percent stress or load relaxation. That is, there should be, (1) no or low relaxing of the stress or unloading while the material is stretched, and (2) complete or high recovery to original dimensions after the stretching, biasing or straining is discontinued. Thus, an elastic material is typically a polymer which, free of diluents, has a break elongation in excess of 100% independent of any crimp (when in fiber form) and which when stretched to twice its length, held for one minute, and then released, retracts to less than 1.5 times its original length within one minute of being released. Such polymers include, but are not limited to, natural rubber or synthetic rubbers, segmented polyurethanes (including polyurethaneureas) such as polyetherurethanes and polyesterurethanes, polyetheresters, elastomeric polyethylenes and polypropylenes, and polyetheramides.

Preferably, the elastic material is selected from the group consisting of elastomeric fiber, tape, film, strip, coating, ribbon and/or sheet, and, substantially linear ethylene polymers.

As examples of elastic material, mention may be made of spandex (e.g., Lycra® spandex and Lycra® XA, a spandex having little or no lubricating finish thereon).

The elastic material may comprise spandex or melt spun elastomers, or it may comprise natural or synthetic rubbers in the form of fibers or in the form of strips less than about 10 mm wide.

The U.S. International Trade Commission defines spandex as a manufactured fiber in which the fiber-forming substance is a long-chain synthetic polymer comprised of at least 85 percent by weight of a segmented polyurethane. Lycra® spandex is known to exhibit nearly ideal, temperature independent elastic properties.

Preferably, the elastic material(s) is(are) inserted between a first substrate selected from polyolefin films, such as polyethylene or polypropylene films, and a second substrate selected from non-woven materials, such as non-woven polypropylene or non-woven polyethylene.

Preferably, the laminate of the invention comprises at least two, preferably at least three elastic materials inserted between two substrates.

Preferably, the elastic material is in the form of a strand of elastic, having preferably a linear density ranging from 235 dtx to 1520 dtx.

The present invention also relates to a process for manufacturing the laminate according to the invention comprises the following steps:

- providing a first substrate,
- providing at least one elastic material,
- applying the hot melt adhesive composition according to the invention onto at least one elastic material,
- contacting the elastic material(s) covered with the hot melt adhesive composition with the first substrate,
- contacting the second substrate with the elastic material(s).
- compression between two rollers.

Preferably, the elastic material is stretched before application of the adhesive composition, preferably such that the length of the elastic ranges from 2 to 4 times its length at rest (i.e. without stretching), ideally the stretching is performed such that the length of the elastic becomes 3 times longer that the length of the elastic at rest.

Preferably, the hot melt adhesive composition is applied at a temperature ranging from 130°C to less than 160°C, preferably at a temperature ranging from 145 to 155°C, ideally at a temperature of approximately 150°C.

Preferably, the compression level of the laminates at the nip rolls is about 1 bar.

The hot melt adhesive composition of the invention may be applied onto the elastic material either by contact applications or by spraying applications.

The contact application uses a contact nozzle from which the adhesive composition may be applied onto the elastic material in a straight way. In the case wherein the elastic material is in the form of a strand, the hot melt adhesive composition may be applied onto the elastic material in a straight way along the strand. If there are several elastic strands in the laminate, the adhesive composition may be applied separately onto each strand. A same apparatus may comprise several nozzle in order to apply the hot melt adhesive composition simultaneously onto the several elastic strands. An example of process for applying the adhesive composition with a contact application is described in document US 2012/0258246.

An example of devices for the contact application is the Allegro® device from Nordson.

According to this embodiment, the hot melt adhesive composition is applied at a rate ranging from 100 to 600 m/min. Preferably, the amount of hot melt adhesive composition may range from 10 to 100 mg per meter of elastic strand, preferably from 20 to 50 mg/m of elastic strand. Preferably, the amount of hot melt adhesive composition is expressed per meter of elastic strand under stretch.

The present invention also relates to an article comprising the laminate as disclosed above. The article is preferably a disposable absorbent article, more preferably chosen from the group consisting of disposable diapers, training pants, adult incontinent products (pads or briefs), periodic care products (napkins or pads) and surgical masks, more preferably from the group consisting of adult incontinent products (pads or briefs) and periodic care products (napkins or pads). More preferably it is a disposable diaper.

All the description, embodiments, preferred embodiments defined above for the hot melt adhesive composition apply here for the disposable absorbent article without need to repeat it.

The ranges disclosed in this description include both the lower and the upper limit thereof. For example, the expressions "ranging from x to y" or "between x and y" comprises the limits x and y.

All the preferred embodiments for the ingredients (such as for example preferred weight percentages, or preferred nature of ingredients) of the hot melt adhesive composition can be combined with each other without need to expressly describes all the combinations.

## Examples

The following examples illustrate the invention without limiting it.

### Material used in the examples

The components used in the examples are described below.

- Vector®4411S from TSRC, a linear SIS (with 44% styrene content and 0% diblock);
- Polyester P from Vandeputte (oligoester made by polycondensation from pure ricinoleic acid, with acid value of 12-16 mgKOH/g and a hydroxyl value max 30mg KOH/g);
- IRGANOX 1010 from BASF which is a phenolic type antioxidant;
- DercolyteOM105 from DRT-Pinova: Beta pinene polyterpene resin made from the polymerization of a mix of alpha and beta pinene, having a Ring and Ball softening point ranging of 105°C. Renewable carbon content is 100%;
- SYLVALITE®9000 from Kraton: fully hydrogenated rosin ester resin, having a Ring and Ball softening point ranging of 70°C;
- CALPRENE® 540 from DYNASOL is a linear SBS copolymer (with 40% styrene content and 0% diblock);
- KRATON®MD1156 from KRATON is a linear SBS copolymer (with 40% styrene content and 0% diblock);
- GLOBALPRENE®3545 from LCY is a linear SBS copolymer (with 45% styrene content and 65% diblock);
- ESTEREOL A (from ARKEMA) is bio-based mixture of methyl esters of linear fatty acids;
- POLYETHYLENE WAX LP1040T from SCG: refined polyethylene homopolymer wax derived from the unique HDPE process.

## Preparation of the adhesive compositions

The compositions of example 1 in Table 1 are individually prepared by simple mixing of its ingredients. Polymer(s), plasticizer(s) and stabilizer(s) are mixed together and heated at 135 °C until everything dissolved as a homogeneous mixture. Then, resin(s) are added at the same temperature until everything dissolved as a homogeneous mixture. At the end, the mixture is cooled down and collect to be used as it.

## Preparation of an elastic laminate by means of an allegro nozzle coating equipment

A laminate is prepared as follows. Use is made, as a laminating device, of a machine operating continuously at a line speed of approximately 200 m/minute, which machine is sold by NORDSON under the name of Coater CTL 4400.

In this machine, the coating nozzle is a Allegro nozzle.

The two substrates employed are:

- a 22 g/m2 PE film breathable which has a width of 20 cm, untreated side and
- a 10 g/m2 spunbond hydrophobic nonwoven sheet of the same width, which is composed of fibers of polypropylene (PP)

Elastic used : Elastics brand having 800 dtex (Invista)

The hot melt adhesive was applied to elastic strands by Allegro coating after elastics were stretched with 300% elongation. Then, applied to a nonwoven fabric as primary substrate and then PE film with an open time of 0.5 seconds and 1 bar compression. The coating temperature was set to 150°C, with an add-on approximately 25-35 mg/lm/strand on elastic strands.

## Creep resistance measured initially and after aging at 23°C and at 55°C

The laminates obtained are then packaged as a roll and left for 24 hours at ambient temperature and at 50% relative humidity.

### *Creep evaluation*

Creep resistance test was carried out on laminates prepared above. The laminates comprise an elastic strand and non-elastic substrates. A segment of the laminate about 350 mm is stretched completely and is securely attached to a piece of Plexiglas board. A length of 300 mm is marked and the elastic strands are cut at the marks while the non-elastic substrates are maintained in the stretched configuration. The test samples (laminates) were placed into the oven at 38°C for 4 hours. Under these conditions, the elastic strands under stretch can retract to a certain distance. The distance between the ends of the elastic strands is measured after the 4 hours. The ratio of the final length to the initial length, defined as the creep retention and expressed in percentage (%), is a measure of the ability of the adhesive to hold the elastic strands.

$$\% \text{ Creep retention} = [\text{Final length})/ \text{ Initial Length}]* 100\%$$

The higher is the %creep retention, the better. A % creep retention lower than 80% is not acceptable.

The Creep resistance after 4 weeks at 55°C, is measured by repeating the above protocol except that the assembly obtained after lamination is aged during the respective time at 55°C, then measured at 23°C after 24h at 23°C, is expressed in %.

## Storage Modulus G'

Dynamical Mechanical Analysis (DMA)

A rheometer applied a shear stress to an adhesive and measured the resulting strain (shear deformation) response as a function of a temperature cooling ramp.

Equipment: DHR-1 Rheometer by TA Instrument, which applies a small oscillatory stress to achieve a constant oscillatory strain within the linear viscoelastic region of the adhesive (e.g. 1%).

General protocol: The adhesive was placed between a Peltier plate acting as lower, fixed plate and an upper plate with a radius R of 10 mm, which was connected to the drive shaft of a motor to generate the shear stress. The gap between both plates has a height H of 1,000 $\mu$m. The Peltier plate controls the temperature of the material (+/- 0.5°C).

Test execution:

- After GAP 0 at 80°C, setting the temperature to the start temperature (i.e. 150°C);
- placing the adhesive (1 cm3) on the Peltier plate;
- lowering the upper plate to a gap of 1,700 $\mu$m till its contacts the adhesive;
- removing excessive material and setting the temperature to 120°C;
- lowering the upper plate to a gap of 1,000 $\mu$m;

- setting the temperature to the start temperature of 120°C, the constant measurement strain to 1%, the constant oscillation frequency to 1 Hz and the cooling rate to 6°C/min (from 120°C to -10°C);
- after completing the test, melting the adhesive, lifting the upper plate and removing the adhesive from both the Peltier plate and the upper plate; and
- setting the temperature back to room temperature.

Result: Storage modulus were calculated all along the cooling step every 30 seconds. G' at 25°C was determined accordingly.

## Young Modulus

The sample of adhesive is melted before being casted in a Dog Bone-shaped mold. The Dog Bone specimens obtained are made of two large grip zones linked by a narrow test zone of dimensions 30x3x3mm. The dog bones are tested via a tensile machine that will apply a constant strain speed of 300mm/min until the specimen breaks. In order to get the Young's modulus from the stress-strain curve, a line is drawn using the least-squares fit method on the points located between the beginning of the curve and the yield point. The slope of the obtained line is the value of the Young's modulus.

### Example 1 : hot melt adhesive compositions

The hot melt adhesive compositions were prepared as mentioned above.

Table 1 : hot melt adhesive compositions and their properties

| | C1 (wt%) | C2 (wt%) | C3 (wt%) | C4 (wt%) | C5 (wt%) | C6 (wt%) | comparative composition C7 | comparative composition C8 |
|---|---|---|---|---|---|---|---|---|
| D20-003 (castor oil oligoester - VANDEPUTTE) | - | - | - | - | - | - | - | 7.6 |
| Polyester P (VANDEPUTTE) | 3.7 | 4 | 3.7 | 3.7 | 7.4 | 3.7 | 6,8 | - |
| ESTEREROL A | 3.7 | 4 | 3.7 | 3.7 | - | 3.7 | 6,8 | - |
| DERTCOLYTE® M105 | 30 | 30.5 | 30 | 30 | 34.7 | 30.8 | 30 | - |
| SYLVALITE® S9000 | 34.7 | 35.2 | 34.7 | 34.7 | 30 | 35.6 | 28,5 | - |
| FORAL®DX | - | - | - | - | - | - | - | 69.5 |
| SINOPEC®1126 | - | - | - | - | - | - | - | 6.4 |
| SINOPEC®1209 | - | - | - | - | - | - | - | 15.5 |
| VECTOR®4411 | - | - | 25 | - | - | - | - | - |
| CALPRENE®540 | 25 | - | - | 12 | - | - | 25 | - |
| KRATON®MD1156 | - | 23.4 | - | - | - | 25 | - | - |
| GLOBALPRENE®3545 | - | - | - | 13 | 25 | - | - | - |
| WAX LP 1040 | 1.7 | 1.7 | 1.7 | 1.7 | 1.7 | - | 1.7 | - |
| Irqanox 1010 | 1.2 | 1.2 | 1.2 | 1.2 | 1.2 | 1.2 | 1.2 | 0.9 |
| TOTAL | 100% | 100% | 100% | 100% | 100% | 100% | 100% | 100% |
| | | | | | | | | |
| Styrene content in the adhesive (%) | 10 | 9.4 | 11 | 10.4 | 10.8 | 10 | 10.2 | 5.6 |
| Young Modulus at 25°C (MPa) | 4.4 | 4.4 | 18.4 | 5.8 | 6.4 | 3.1 | 1.3 | 0.1 |

(continued)

| | C1 (wt%) | C2 (wt%) | C3 (wt%) | C4 (wt%) | C5 (wt%) | C6 (wt%) | comparative composition C7 | comparative composition C8 |
|---|---|---|---|---|---|---|---|---|
| G' at 25°C (kPa) | 970 | 570 | 1300 | 850 | 2030 | 120 | 290 | - |
| % creep retention | 4% | 4% | 10% | 5% | 7% | 4% | 41% | >50% |

The compositions C1 to C6 are hot melt adhesive compositions according to the invention. They advantageously exhibit Young Modulus higher than 2 MPa, preferably higher than 3 MPa, compared to comparative compositions C7 and C8 which exhibit lower Young Modulus, in particular lower than 1.5 MPa.

Concerning the storage Modulus G': the compositions C1 to C6 (invention) advantageously lead to storage Modulus higher than 100 kPa. Besides, the compositions C1 to C6 advantageously provide excellent %creep retention, in particular from 4% to 10%, while comparative compositions C7 and C8 lead to poor creep retention (respectively 41% and >50%).

## Claims

1.  A hot melt adhesive composition comprising:

    - a) a styrene block polymeric component;
    - b) at least one tackifying resin;
    - c) a biobased plasticizer having a weight average molecular weight higher than or equal to 2 000 g/mol, wherein the hot melt adhesive composition comprises a styrene content higher than or equal to 8.0%, and wherein the total weight content of the biobased plasticizer c) is lower than or equal to 12% by weight based on the weight of the hot melt adhesive composition.

2.  The hot melt adhesive composition according to claim 1, wherein the styrene block polymeric component comprises a styrene block copolymer selected from the group consisting of SB, SI, SEB, SEP, SBBS, SBS, SEBS, SEPS, SEEPS, SIBS, SIS, random-block SBR, random-block SIR, and mixtures thereof.

3.  The hot melt adhesive composition according to anyone of claim 1 or 2, wherein the styrene block polymeric component comprises a SIS or a SBS copolymer.

4.  The hot melt adhesive composition according to anyone of claims 1 to 3, wherein it comprises from 5 % to 35 % by weight, preferably from 10% to 30% by weight, and even more preferably from 10% to 30% by weight of styrene block polymeric component, based on the total weight of the hot melt adhesive composition.

5.  The hot melt adhesive composition according to anyone of claims 1 to 4, wherein the at least one tackifiying resin is selected from the group consisting of:

    - i) natural and modified rosins and the hydrogenated derivatives thereof, such as, for example, gum rosins, wood rosins, tall-oil rosins, distilled rosins, dimerized rosins and polymerized rosins;
    - ii) glycol, glycerol and pentaerythritol esters of natural and modified rosins, and the hydrogenated derivatives thereof,
    - iii) polyterpene homopolymers and the hydrogenated derivatives thereof;
    - iv) copolymers of terpene with a diene monomer, and the hydrogenated derivatives thereof;
    - v) phenolic-modified terpene resins;
    - and mixtures thereof.

6.  The hot melt adhesive composition according to claim 5, wherein it comprises a mixture of at least one tackifying resin ii) and at least one tackifying resin iii).

7.  The hot melt adhesive composition according to anyone of claims 1 to 6, wherein it comprises from 50% to 90 %, preferably from 55% to 80 %, and more preferably from 55% to 70% by weight of a tackifying resin (or of the mixture of tackifying resins in case a plurality of tackifying resins are present in the hot melt adhesive composition), based on the total weight of the hot melt adhesive composition.

8. The hot melt adhesive composition according to anyone of claims 1 to 7, wherein the styrene content of the hot melt adhesive composition ranges from 8.0% to 15.0%, more preferably from 9.0% to 12.0%.

9. The hot melt adhesive composition according to anyone of claims 1 to 8, wherein the biobased plasticizer has a weight average molecular weight ranging from 3 000 g/mol to 12 000 g/mol, more preferably ranging from 3 000 g/mol to 6 000 g/mol.

10. The hot melt adhesive composition according to anyone of claims 1 to 9, wherein the biobased plasticizer is selected from animal fat, plant oil (e.g. canola oil, corn oil, soybean oil, epoxidized soybean oil, palm oil, peanut oil, olive oil, sunflower oil, rapeseed oil, jatropha oil, coconut oil, castor oil, etc.), lactic acid derivatives, modified versions thereof, fatty acid derivatives, and combinations thereof.

11. The hot melt adhesive composition according to anyone of claims 1 to 10, wherein the biobased plasticizer has an acid number ranging from 1 to 20, preferably from 3 to 20 mg KOH/g.

12. The hot melt adhesive composition according to anyone of claims 1 to 11, wherein the biobased plasticizer has a viscosity at 25°C ranging from 1000 to 5 000 mPas, preferably from 1 500 to 2 500 mPas.

13. The hot melt adhesive composition according to anyone of claims 1 to 12, wherein the biobased plasticizer is a fatty acid derivative, preferably a fatty acid ester, more preferably a fatty acid polyester, and even more preferably a homopolymer of ricinoleic acid.

14. The hot melt adhesive composition according to anyone of claims 1 to 13, wherein it comprises from 1% to 10% by weight, preferably from 2% to 10% by weight of the biobased plasticizer c) based on the total weight of the hot melt adhesive composition.

15. The hot melt adhesive composition according to anyone of claims 1 to 14, wherein it comprises at least one fatty acid derivative d) having a weight average molecular weight lower than or equal to 1 500 g/mol, preferably lower than or equal to 1 000 g/mol, and even more preferably ranges from 250 g/mol to 1 000 g/mol.

16. The hot melt adhesive composition according to anyone of claims 1 to 15, wherein it has a Brookfield viscosity at 163°C of from about 2000 to about 10000 mPa.s, preferably from about 3000 to about 9000 mPas.

17. The hot melt adhesive composition according to anyone of claims 1 to 16, wherein the biocarbon content of the hot melt adhesive is greater than or equal to 60 %, preferably greater than or equal to 65 %, and even more preferably greater than or equal to 70 %.

18. The hot melt adhesive composition according to anyone of claims 1 to 17, wherein it has:

   - a creep retention lower than or equal to 20%, more preferably lower than or equal to 15%, and even more preferably lower than or equal to 10%; and/or
   - a Young Modulus higher than or equal to 2 MPa, more preferably higher than or equal to 4 MPa; and/or
   - a Storage Modulus (G') at 25°C higher than or equal to 100 kPa, more preferably higher than or equal to 500 kPa.

19. The use of the hot melt adhesive composition as defined in anyone of claims 1 to 18, as positioning adhesive, core adhesive or elastic attachment adhesive, more preferably as elastic attachment adhesive.

20. A laminate comprising at least one elastic material and at least two substrates, said elastic material being inserted between two substrates and covered with the hot melt adhesive composition as defined in anyone of claims 1 to 18.

21. Article comprising the laminate as defined in claim 19, said article being preferably a disposable absorbent article.

Europäisches
Patentamt

European
Patent Office

Office européen
des brevets

# EUROPEAN SEARCH REPORT

**Application Number**

EP 23 30 6029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/174155 A1 (BOSTIK SA [FR]) 3 September 2020 (2020-09-03) * page 9, line 23 - line 28; claims; example 5 * * page 1, lines 6-9 * | 1-21 | INV. C08L53/02 C09J153/02 |
| A | US 9 988 528 B2 (FOUQUAY STEPHANE ANDRE [FR]; GOUBARD DAVID [FR]; BOSTIK SA [FR]) 5 June 2018 (2018-06-05) * examples; table 1 * | 1-21 | |
| A | WO 2020/092515 A2 (HENKEL IP & HOLDING GMBH [DE]; HENKEL AG & CO KGAA [DE] ET AL.) 7 May 2020 (2020-05-07) * paragraph [0023]; example S5; table 2 * | 1-21 | |
| A | US 2023/025893 A1 (ZHOU HAIYING [US] ET AL) 26 January 2023 (2023-01-26) * claims; examples * | 1-21 | |
| | | | TECHNICAL FIELDS SEARCHED (IPC) C08L C09J |

The present search report has been drawn up for all claims

| Place of search | Date of completion of the search | Examiner |
|---|---|---|
| Munich | 25 August 2023 | Reisbeck, Felix |

EPO FORM 1503 03.82 (P04C01)

## ANNEX TO THE EUROPEAN SEARCH REPORT
## ON EUROPEAN PATENT APPLICATION NO.

EP 23 30 6029

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2023

| Patent document cited in search report | | | Publication date | Patent family member(s) | | Publication date |
|---|---|---|---|---|---|---|
| WO 2020174155 | A1 | | 03-09-2020 | CN | 113454181 A | 28-09-2021 |
| | | | | EP | 3931282 A1 | 05-01-2022 |
| | | | | FR | 3093337 A1 | 04-09-2020 |
| | | | | JP | 2022522465 A | 19-04-2022 |
| | | | | US | 2022041899 A1 | 10-02-2022 |
| | | | | WO | 2020174155 A1 | 03-09-2020 |
| US 9988528 | B2 | | 05-06-2018 | AU | 2008281661 A1 | 05-02-2009 |
| | | | | BR | PI0812758 A2 | 25-11-2014 |
| | | | | CA | 2705746 A1 | 05-02-2009 |
| | | | | CN | 101730728 A | 09-06-2010 |
| | | | | EP | 2164916 A1 | 24-03-2010 |
| | | | | ES | 2432185 T3 | 02-12-2013 |
| | | | | FR | 2918069 A1 | 02-01-2009 |
| | | | | JP | 5547633 B2 | 16-07-2014 |
| | | | | JP | 2010531908 A | 30-09-2010 |
| | | | | NZ | 581960 A | 26-08-2011 |
| | | | | RU | 2010102883 A | 10-08-2011 |
| | | | | US | 2010193127 A1 | 05-08-2010 |
| | | | | WO | 2009016285 A1 | 05-02-2009 |
| WO 2020092515 | A2 | | 07-05-2020 | BR | 112021005051 A2 | 08-06-2021 |
| | | | | WO | 2020092515 A2 | 07-05-2020 |
| US 2023025893 | A1 | | 26-01-2023 | US | 2023025893 A1 | 26-01-2023 |
| | | | | US | 2023029135 A1 | 26-01-2023 |
| | | | | WO | 2023288259 A1 | 19-01-2023 |
| | | | | WO | 2023288260 A1 | 19-01-2023 |

EPO FORM P0459

For more details about this annex : see Official Journal of the European Patent Office, No. 12/82

**EP 4 484 497 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120258246 A